Europäisches Patentamt

**European Patent Office**

Office européen des brevets

(11) Numéro de publication : **0 438 337 A1**

# (12) DEMANDE DE BREVET EUROPEEN

(21) Numéro de dépôt : 91400063.3

(51) Int. Cl.⁵ : **C09K 11/84**

(22) Date de dépôt : **11.01.91**

(30) Priorité : 19.01.90 FR 9000609

(43) Date de publication de la demande :
**24.07.91 Bulletin 91/30**

(84) Etats contractants désignés :
**DE GB IT NL**

(71) Demandeur : THOMSON-CSF
**51, Esplanade du Général de Gaulle
F-92800 Puteaux (FR)**

(72) Inventeur : **Morell, Antoinette
THOMSON-CSF, SCPI, Cédex 67
F-92045 Paris la Défense (FR)**
Inventeur : **Marx, Annie
THOMSON-CSF, SCPI, Cédex 67
F-92045 Paris la Défense (FR)**

(74) Mandataire : **Guérin, Michel et al
THOMSON-CSF SCPI
F-92045 PARIS LA DEFENSE CEDEX 67 (FR)**

(54) **Procédé de fabrication d'un matériau luminophore.**

(57)    Procédé de fabrication d'un matériau luminophore selon lequel on réalise un mélange en
poudre d'un oxyde coprécipité d'yttrium et
d'enropium, d'un sel de sodium et de soufre ;
puis on fait subir un traitement thermique à ce
mélange de poudre de façon à faire fondre le sel
de sodium et le soufre pour que ce flux fondu
réagisse avec l'oxyde pour former un oxysulfure
d'yttrium dopé europium. On laisse l'ensemble
se solidifier puis on lave le matériau pour obtenir la poudre d'oxysulfure d'yttrium dopé europium.
    Application : écrans de télévision.

EP 0 438 337 A1

## PROCEDE DE FABRICATION D'UN MATERIAU LUMINOPHORE

L'invention concerne un procédé de fabrication d'un matériau luminophore et plus particulièrement un matériau à base d'oxysulfure d'yttrium ou de gadolinium dopé europium.

Le luminophore rouge généralement utilisé dans les applications télévision pour la fabrication des écrans de télévision est l'oxysulfure d'yttrium dopé à l'europium. Le produit d'origine standard est un luminophore dit "mill phosphor" qui nécessite un broyage de 8 à 10 heures avant son dépôt sur l'écran d'un tube de télévision. Ce broyage est néfaste car il dégrade les propriétés de luminescence du luminophore. Depuis quelques années de nouveaux luminophores beaucoup plus performants dits "no-mill phosphors " se déposent après un simple mélange de deux heures et ont un rendement lumineux de 115 % par rapport au produit standard.

La synthèse de l'oxysulfure d'yttrium est difficile à maîtriser. Il faut en effet :

– répartir l'oxyde d'europium $Eu_2O_3$ qui est le dopant, l'activateur, dans la matrice constituée d'oxyde d'yttrium $Y_2O_3$ de telle sorte que le mélange soit très homogène.

– éviter au cours des traitements thermiques, l'oxydation de l'oxysulfure $Y_2O_2S$ en oxyde $Y_2O_3$.

– contrôler la taille des grains de luminophores autour de 8 μm environ afin d'avoir une bonne définition des lignes sur l'écran de télévision ainsi que les caractéristiques requises.

– obtenir une poudre désagglomérée ou "no-mill phosphor" pour pouvoir l'utiliser sans lui faire subir de traitements mécaniques néfastes pour ses caractéristiques.

– concilier tous les impératifs précédents avec l'obtention d'un rendement lumineux élevé associé a des coordonnées trichromatiques bien définies.

L'invention concerne donc un procédé de fabrication d'un matériau en poudre luminophore à base d'oxysulfure d'yttrium ou de gadolinium dopé europium caractérisé en ce qu'il comporte les étapes suivantes :

a) une première étape de mélange des matériaux en poudre suivants :

– oxyde d'yttrium $Y_2O_3$ ou d'oxyde de gadolinium $Gd_2O_3$,

– oxyde d'europium,

– un premier sel de sodium,

– soufre.

b) une deuxième étape de traitement thermique permettant la fusion du premier sel de sodium et du soufre de façon à obtenir une réaction du flux fondu avec l'oxyde pour former l'oxysulfure d'yttrium ou de gadolinium dopé europium ;

c) une troisième étape de refroidissement du mélange liquide obtenu lors de la deuxième étape ;

d) une quatrième étape de lavage du matériau obtenu lors de la troisième étape de façon à obtenir une poudre à base d'oxysulfure d'yttrium ou de gadolinium dopée europium.

L'invention présente l'avantage de permettre la synthèse de l'oxysulfure d'yttrium dopé à l'europium, selon un procédé simple. Le luminophore obtenu présente d'excellentes caractéristiques physico-chimiques et optiques comparables à celles du meilleur produit commercialisé à ce jour.

Les différents objets et caractéristiques de l'invention apparaîtront dans la description qui va suivre.

Selon le procédé général de l'invention permettant de préparer une poudre homogène d'oxysulfure d'yttrium ou de gadolinium dopé europium on prévoit les différentes étapes suivantes :

a) une première étape de mélange de poudres des matériaux suivants :

– un oxyde A d'yttrium $Y_2O_3$ ou de gadolinium $Gd_2O_3$,

– un oxyde E d'europium,

– un sel B de sodium,

– du soufre S.

Le mélange a pour formule :

$$x(A,E) + yB + uS$$

avec des valeurs molaires :

$$x = 1$$
$$1 \leqq y \leqq 3$$
$$2 \leqq u \leqq 10.$$

b) une deuxième étape de fusion du sel de sodium et du soufre. Le flux de sel de sodium et de soufre obtenu réagit avec l'oxyde pour former un polysulfure fondu $Na_2S_n$. Ce dernier réagit avec l'oxyde (A, E) pour former l'oxysulfure. Cette fusion se fait en l'absence d'oxygène. Pour cela on recouvre le mélange de poudre par une couche de soufre qui abrite le mélange de l'air ambiant. De plus, on peut prévoir une circulation d'un gaz neutre tel que de l'azote au-dessus de la surface du creuset.

c) une troisième étape de refroidissement du mélange liquide obtenu, et cela toujours à l'abri de l'air ambiant, jusqu'à solidification du mélange.

d) une quatrième étape de lavage du matériau obtenu à l'aide d'un fluide tel que de l'eau.

On obtient alors un oxysulfure d'yttrium ou de gadolinium dopé europium. En effet, le sel de sodium et le soufre présents dans le mélange de poudre de la première étape ont permis la formation d'un polysulfure $Na_2S_n$ qui réagit avec l'oxyde (A, E) par une réaction de dissolution-précipitation pour former l'oxysulfure. Lors du lavage, des résidus tel que :

- $Na_2SO_4$
  $H_2S$
  $CO_2$
  $SO_2$

sont séparés de l'oxysulfure d'yttrium ou de gadolinium à l'aide du produit de lavage (eau) et sont enlevés par ce produit de lavage.

Selon un exemple de réalisation le sel de sodium est du $Na_2CO_3$.

Selon une variante du procédé de l'invention l'oxyde d'yttrium (ou de gadolinium) et l'oxyde d'europium sont un oxyde coprécipité d'yttrium (ou de gadolinium) et d'europium.

Selon une autre variante de réalisation du procédé de l'invention, on prévoit, lors de la première étape du procédé, de mélanger également au mélange de poudres, une poudre d'un autre sel qui fondra également lors de la deuxième étape, et qui permettra d'abaisser la température de fusion du mélange et d'obtenir un oxysulfure d'yttrium dopé europium à grains désagglomérés. Ce deuxième sel est par exemple un sel de phosphate tel qu'un phosphate de potassium $K_3PO_4$ ou un dihydrogénophosphate de potassium $NaH_2PO_4$.

Dans le cadre des proportions indiquées précédemment la proportion z de ce deuxième sel est compris dans la gamme suivante :

$$0 \leqq z \leqq 1$$

Une des originalités de l'invention est que l'oxysulfure d'yttrium dopé à l'europium est préparé à partir d'un mélange coprécipité d'oxyde d'yttrium $Y_2O_3$ et d'oxyde d'europium $Eu_2O_3$. L'europium est dans ces conditions réparti d'une façon extrêmement homogène puisqu'elle se fait à l'échelle atomique. Le pourcentage d'europium qui permet d'obtenir un luminophore rouge pour les applications télévision est compris entre 3 et 8 % en poids. La méthode de synthèse de l'invention concerne une méthode de synthèse par flux.

On va maintenant décrire un exemple de réalisation détaillé selon l'invention. Aux oxydes coprécipités choisis précédemment (oxyde d'yttrium ou de gadolinium et oxyde d'europium) on ajoute un flux constitué essentiellement de carbonate de sodium $Na_2CO_3$, de phosphate tels le dihydrogénophosphate de sodium $NaH_2PO_4$ ou le phosphate de potassium $K_3PO_4$ ou encore le fluorophosphate d'ammonium $NH_4PF_6$ et le soufre S. Tous ces constituants sont mélangés à sec dans un appareil de type "Turbula". La durée du mélange est généralement 4 heures. Les proportions respectives de ces constituants sont d'une manière générale :

$$xY_2O_3, Eu_2O_3 + yNa_2CO_3 + z\,NaH_2PO_4 + uS$$

avec des valeurs molaires :

$$x = 1$$
$$1 \leqq y \leqq 3$$
$$0 \leqq z \leqq 1$$
$$2 \leqq u \leqq 10$$

Un traitement thermique du mélange permet de transformer l'oxyde $Y_2O_3$, $Eu_2O_3$ en oxysulfure. Cette transformation s'effectue par l'intermédiaire des polysylfures $Na_2S_n$ (provenant de l'action du soufre sur le carbonate) qui réagissent avec l'oxyde par une réaction de dissolution-précipitation. Afin d'éviter toute oxydation de l'oxysulfure en oxyde on place le mélange oxyde et flux dans un creuset en alumine, il est recouvert par une couche de soufre pulvérulent qui fait barrière à l'oxygène de l'air. On dispose enfin un couvercle (en alumine) sur le creuset. Ce creuset est disposé dans un four à moufle dans lequel on fait passer un courant d'azote à faible débit pour diminuer la teneur en oxygène de l'atmosphère du four. La température du four est augmentée jusqu'à un palier compris entre 1100 et 1300°C. Ce palier est maintenu pendant 1 à 10 heures puis on ramène le four à la température ambiante.

La récupération de l'oxysulfure s'effectue par lavage à l'eau du produit traité thermiquement. Cette opération permet de dissoudre les résidus de flux pour ne garder que l'oxysulfure. Après séchage à l'étuve de la poudre à environ 100°C pendant 8 heures, elle est tamisée (tamis possédant des ouvertures de mailles de 400 micromètres) puis caractérisée.

On va maintenant donner des exemples de composition du mélange de poudre et indiquer pour chacun de ces exemples la température du traitement thermique et les caractéristiques de la poudre d'oxysulfure d'yttrium dopée europium obtenue.

EXEMPLE N°1

– composition du mélange :
1 $Y_2O_3$, $Eu_2O_3$ + 2 $Na_2CO_3$ + 0,5 $NaH_2PO_4$ + 5S
– traitement thermique : 1 250°C pendant 2 heures.
– diamètre des grains d'oxysulfure d'yttrium = 9,1 μm
– rendement lumineux : 19 lumen/W
– coordonnées trichromatique :
X = 0,650
Y = 0,342

EXEMPLE N° 2

– Composition du mélange :
1 $Y_2O_3$, $Eu_2O_3$ + 2 $Na_2CO_3$ + 0,1 $K_3PO_4$ + 5S
– traitement thermique : 1250° C pendant 2 heures
– diamètre des grains d'oxysulfure d'yttrium : 8,1 μm
– Rendement lumineux 19, 4 lumen/W
– Coordonnées trichromatiques :
X = 0,648
Y = 0,343

## EXEMPLE N° 3

– Composition du mélange :
$1Y_2O_3$, $Eu_2O_3$ + $2Na_2CO_3$ + 0,5 $K_3PO_4$ + 5S
– traitement thermique : 1250° C pendant 2 heures
– diamètre des grains d'oxysulfure d'yttrium : 11 μm
– rendement lumineux : 19 lumen/W
– Coordonnées trichromatiques :
X = 0,650
Y = 0,341

## EXEMPLE N° 4

– composition du mélange :
$1Y_2O_3$, $Eu_2O_3$ + $2Na_2CO_3$ + $1Li_2CO_3$ + 5S
– traitement thermique : 1250°C pendant 2 heures
– diamètre des grains d'oxysulfure d'yttrium grains : 10, 5μm
– Rendement lumineux : 17, 3 lumen/W
– Coordonnées trichromatiques :
X = 0,650
Y = 0,341

## EXEMPLE N° 5

– Composition du mélange
1 $Y_2O_3$, $Eu_2O_3$ + 2 $Na_2CO_3$ + 5 % pds $NH_4PF_6$ + 5 S
– traitement thermique : 1250 ° C pendant 2 heures
– diamètre des grains d'oxysulfure d'yttrium : 14,3 μm
– rendement lumineux : 18, 40 lumen/W
– Coordonnées trichromatiques :
X = 0,650
Y = 0,341

Il est bien évident que la description qui précède n'a été fournie qu'à titre d'exemple. Les exemples de matériaux et les valeurs numériques n'ont été fournies que pour illustrer la description.

## Revendications

1. Procédé de fabrication d'un matériau luminophore à base d'oxysulfure d'yttrium ou de gadolinium dopé europium caractérisé en ce qu'il comporte les étapes suivantes :

   a) une première étape de mélange des matériaux en poudre suivants :
   – oxyde d'Yttrium $Y_2O_3$ ou d'oxyde de gadolinium $Gd_2O_3$,
   – oxyde d'europium,
   – un premier sel de sodium,
   – soufre.

   b) une deuxième étape de traitement thermique permettant la fusion du premier sel de sodium et du soufre de façon à obtenir une réaction du flux fondu avec l'oxyde pour former l'oxysulfure d'yttrium ou de gadolimium dopé europium ;

   c) une troisième étape de refroidissement du mélange liquide obtenu lors de la deuxième étape ;

   d) une quatrième étape de lavage du matériau obtenu lors de la troisième étape de façon à obtenir une poudre à base d'oxysulfure d'yttrium ou de gadolinium dopée europium.

2. Procédé selon la revendication 1 caractérisé en ce que l'oxyde d'yttrium ou de gadolinium et l'oxyde d'europium sont un oxyde coprécipité d'yttrium et d'europium ou un oxyde coprécipité de gadolinium et d'europiun.

3. Procédé selon la revendication 1, caractérisé en ce que le sel de sodium est du $Na_2CO_3$.

4. Procédé selon la revendication 1, caractérisé en ce que la première étape de mélange prévoit de mélanger également un deuxième sel permettant d'obtenir une poudre d'oxysulfure désagglomérée.

5. Procédé selon la revendication 4, caractérisé en ce que le deuxième sel est un sel de phosphore.

6. Procédé selon la revendication 5, caractérisé en ce que le sel de phosphore est du phosphate de potassium $K_3PO_4$ ou du dihydrogénophosphate de potassium $Na H_2 PO_4$ ou du fluorophosphate d'ammonium $NH_4PF_6$.

7. Procédé selon la revendication 4, caractérisé en ce que le mélange de poudre a pour formule
   $$x A + y B + zC + u S$$
   dans laquelle A est le mélange d'oxyde coprécipité d'yttrium ou de gadolinium et d'oxyde d'europium, B est le premier sel, C est le deuxième sel et S est le soufre et que les valeurs molaires x, y, z et u ont des valeurs données par les rélations suivantes :
   $$x = 1$$
   $$1 \leqq y \leqq 3$$
   $$0 \leqq z \leqq 1$$
   $$2 \leqq u \leqq 10$$

8. Procédé selon la revendication 1, caractérisé en ce que la quatrième étape de lavage se fait à l'aide d'eau.

9. Procédé selon la revendication 1, caractérisé en ce que la deuxième étape de traitement thermique se fait à l'abri de l'oxygène de l'air.

10. Procédé selon la revendication 9, caractérisé en ce que la deuxième étape de traitement thermique se fait sous un flux d'un gaz neutre.

11. Procédé selon la revendication 9, caractérisé en ce qu'avant le commencement de la deuxième étape de traitement thermique, le mélange de poudres est placé dans un creuset et est recouvert d'une couche de soufre.

EP 0 438 337 A1

**Office européen des brevets**

**RAPPORT DE RECHERCHE EUROPEENNE**

Numero de la demande

EP 91 40 0063

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DATABASE DERWENT WORLD PATENT INDEX AN 79-63562B &JPA 54046188(HITACHI) 11-04-79 *abrégé* | 1, 3-6, 11 | C09K11/84 |
| Y | US-A-3974389 (J.L.FERRI & AL) * le document en entier * | 1, 3-6, 8 | |
| Y | US-A-4405691 (R.L. YALE) * le document en entier * | 1, 3-6, 8 | |
| Y | US-A-4507560 (J.E. MATHERS & AL) * le document en entier * | 1, 3-6, 8 | |
| A | | 2, 7, 9-11 | |

**DOMAINES TECHNIQUES RECHERCHES (Int. Cl.5)**

C09K

Le présent rapport a été établi pour toutes les revendications

| Lieu de la recherche | Date d'achèvement de la recherche | Examinateur |
|---|---|---|
| LA HAYE | 16 AVRIL 1991 | DROUOT M.C. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)